# EUROPÄISCHE PATENTSCHRIFT

(11) **EP 1 364 241 B1**
(45) Veröffentlichungstag und Bekanntmachung des Hinweises auf die Patenterteilung: **11.07.2007**
(21) Anmeldenummer: 02711741.5
(22) Anmeldetag: 26.02.2002
(51) Int. Cl.: G02B 6/38

(54) **FASEROPTISCHES STECKVERBINDERSYSTEM**
FIBER-OPTICAL CONNECTOR SYSTEM
SYSTEME DE CONNECTEUR ENFICHABLE A FIBRE OPTIQUE

(30) Priorität: 01.03.2001 CH 410012001
(43) Veröffentlichungstag der Anmeldung: 26.11.2003
(73) Patentinhaber: HUBER+SUHNER AG, 9100 Herisau (CH)
(72) Erfinder: MARJETIC, Igor, CH-9212 Arnegg (CH); GROB, Thomas, CH-9014 St. Gallen (CH); ZUELLIG, Heinz, CH-9244 Niederuzwil (CH)
(74) Vertreter: Ottow, Jens M.
(86) Internationale Anmeldenummer: PCT/CH2002/000112
(87) Internationale Veröffentlichungsnummer: WO 2002/071122

(56) Entgegenhaltungen:
- EP-A- 0 570 652
- EP-A- 0 613 030
- WO-A-00/16145
- GB-A- 2 112 173

## Beschreibung

### TECHNISCHES GEBIET

Die vorliegende Erfindung bezieht sich auf das Gebiet der Faseroptik. Sie betrifft ein faseroptisches Steckverbindersystem gemäss dem Oberbegriff des Anspruchs 1.

Ein solches System ist z.B. aus den Druckschriften WO-A1-00/16145 oder EP-B1-0 570 652 bekannt.

### STAND DER TECHNIK

Bei faseroptischen Steckverbindersystemen, bei denen üblicherweise zwei optische Fasern durch Einstecken zweier Steckverbinder von zwei Seiten in eine Kupplung lösbar miteinander verbunden werden, müssen die Stirnflächen der beiden zu verbindenden Fasern so in Kontakt gebracht werden, dass ein möglichst verlustfreier Uebergang der optischen Signale zwischen den beiden Fasern stattfinden kann. Die Enden der optischen Fasern, die häufig in Ferrulen eingeklebt sind, fahren dazu von beiden Seiten in eine in der Kupplung angebrachte Führungshülse ein (siehe z.B. die Fig. 10 der EP-B1-0 570 652 oder die Fig. 20 und 21 der WO-A1-00/16145). Damit dies geschehen kann, müssen die Enden der optischen Fasern bzw. Ferrulen am Ende des Einsteckvorganges frei zugänglich sein.

Auf der anderen Seite ist es notwendig, zu verhindern, dass die Enden der optischen Fasern verschmutzen, wenn die Steckverbinder nicht in die Kupplung eingesteckt sind. Grundsätzlich ist es denkbar, dazu Schutzkappen vorzusehen, die mit der Hand über die freien Enden der Steckverbinder geschoben werden. Um jedoch Fehlbedienungen zu vermeiden, ist man dazu übergegangen, bei den Steckverbindern Abdeckmittel vorzusehen, die sich selbsttätig öffnen, wenn der Steckverbinder in die Kupplung eingesteckt wird, und sich auch wieder selbsttätig schliessen, wenn der Steckverbinder aus der Kupplung herausgezogen wird. Zusätzlich sind die Abdeckmittel so eingerichtet, dass ein aus den freien Faserenden austretender Lichtstrahl sicher abgedeckt wird und keinen Schaden anrichten kann.

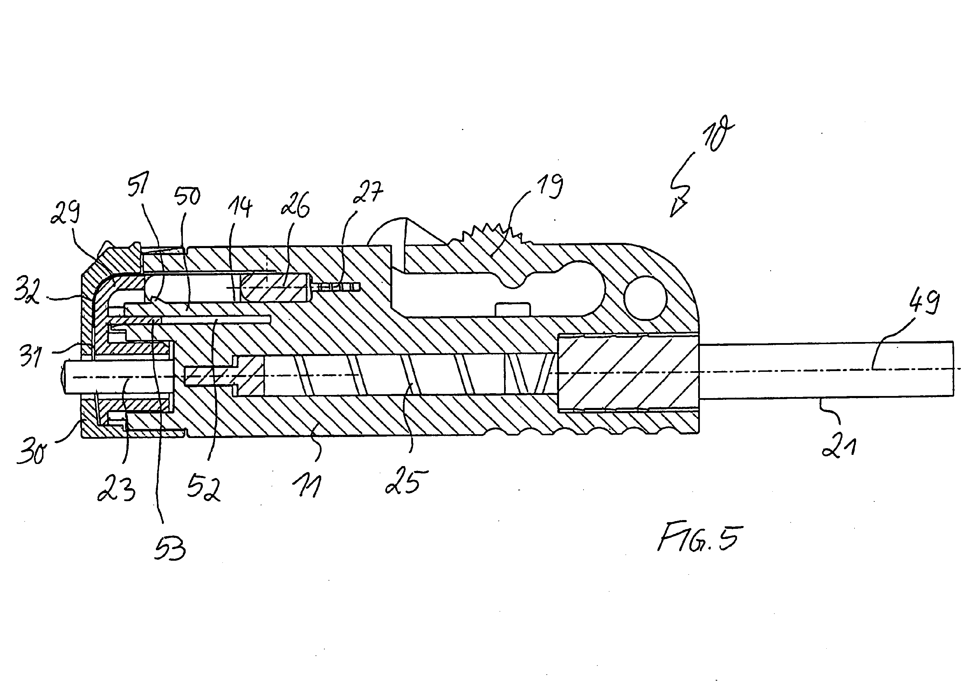

In der WO-A1-00/161145 (ADC) wird ein faseroptisches Steckverbindersystem beschrieben, das einen Steckverbinder und eine Kupplung umfasst. Der Steckverbinder, bei dem die im Inneren geführte optische Faser wahlweise mit ihrem Ende frei zugänglich (Fig. 5, 9) oder in einer Ferrule angeordnet (Fig. 10, 13) sein kann, ist mit einer Abdeckklappe ausgerüstet. Die Abdeckklappe ist um eine feste Schwenkachse schwenkbar gelagert. Sie schwenkt beim Einstecken des Steckverbinders in die Kupplung auf, wenn ein in der Kupplung angeordneter Betätigungsnocken mit einer Führungskulisse an der Abdeckklappe in Eingriff kommt. Die Abdeckklappe und ihr Schwenkbereich sind so ausgelegt, dass nach dem Aufschwenken ein Endabschnitt der optischen Faser bzw. der sie umhüllenden Ferrule nach vorne aus dem Steckverbindergehäuse frei herausragt und in ein in der Kupplung angeordnetes hülsenartiges Führungsteil einfahren kann. Dies hat jedoch zur Folge, dass auf derjenigen Seite, zu der hin die Abdeckklappe aufschwenkt, vergleichsweise viel Platz für die Unterbringung der Abdeckklappe benötigt wird. Dies gilt ebenso für eine ähnliche bekannte Lösung mit fester Schwenkachse, wie sie in der US-A-5,379,362 offenbart ist.

Eine andere bekannte Lösung (EP-B1-0 570 652, Diamond S.A.) sieht eine Abdeckklappe vor, die beim Einstecken des Steckverbinders in die Kupplung in einer ersten Phase um etwa 90° aufgeschwenkt wird und in einer zweiten, nachfolgenden Phase parallel zur Steckachse nach hinten zurückgeschoben wird, um das aus dem Steckergehäuse herausragende Ende der Ferrule vollständig freizugeben. Der Platzbedarf für die Abdeckklappe ist durch die kombinierte Schwenk- und Schiebebewegung zwar geringer als bei der reinen Schwenkbewegung der WO-A1-00/161145, jedoch stellt die kombinierte Bewegung einen vergleichsweise komplizierten Bewegungsablauf dar, der eine hohe Präzision erfordert und anfällig für Funktionsstörungen ist. Darüber hinaus kann hier - ebenso wie bei der Lösung gemäss der WO-A1-00/161145 - die Abdeckklappe versehentlich auch bei nicht eingestecktem Steckverbinder geöffnet werden und offen bleiben.

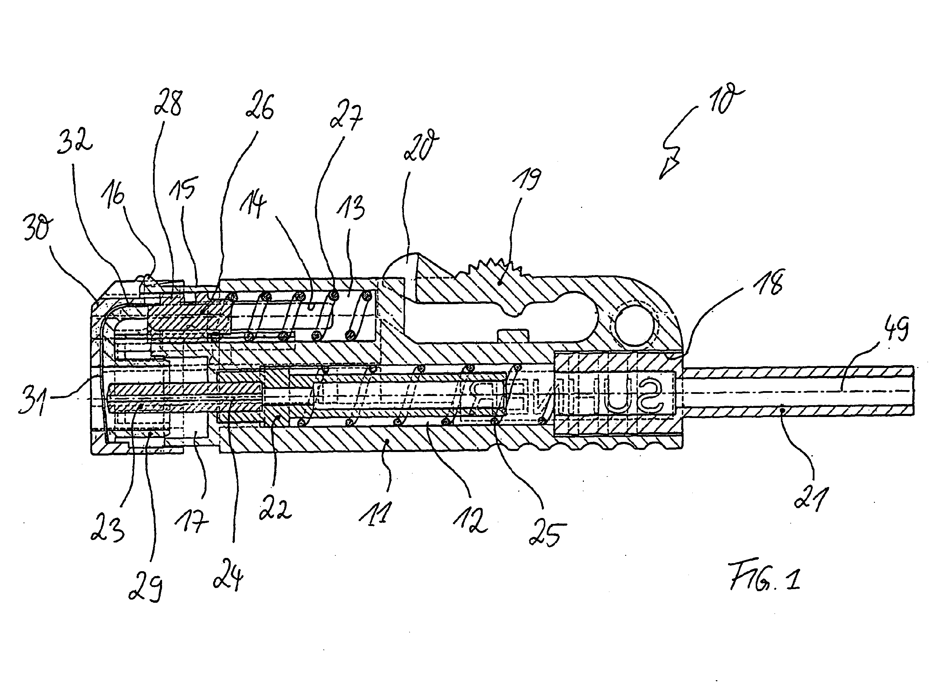

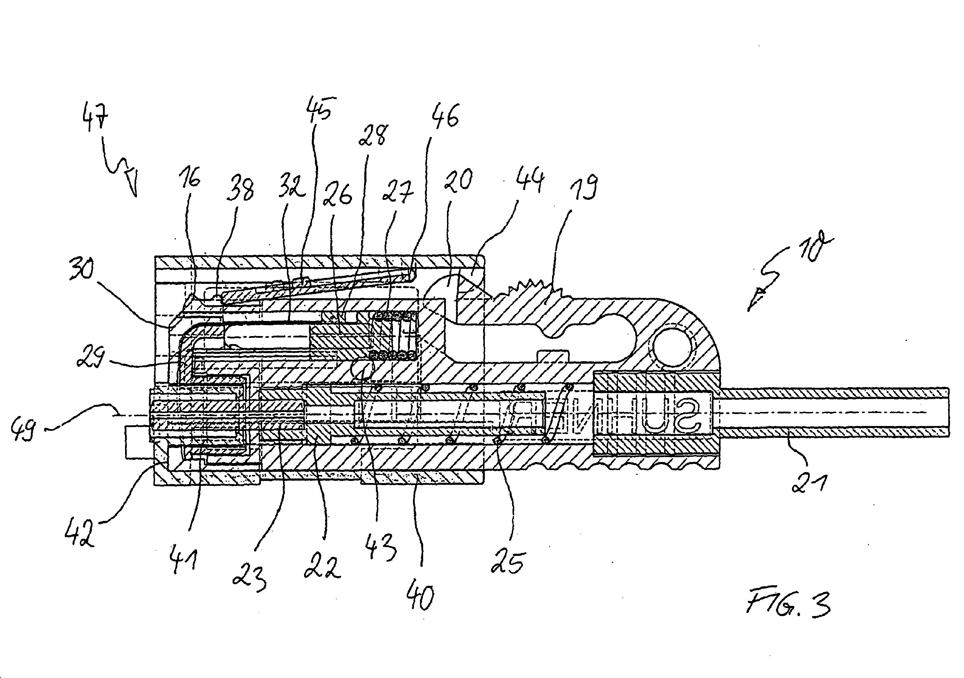

Eine weitere bekannte Lösung für einen beim Einstecken selbsttätig arbeitenden Abdeck- bzw. Schutzmechanismus ist in der GB-A-2,112,173 (Thomas and Betts Corp.) beschrieben. Bei diesem faseroptischen Steckverbinder liegt die Faser mit ihrem Ende in einer aus dem Steckverbindergehäuse nach vorne herausragenden, gegen den Druck einer Feder zurückschiebbaren Führungshülse (44 in Fig. 1 bzw. 144 in Fig. 3), die am vorderen Ende eine Bohrung für die Faser aufweist. An der Führungshülse ist aussen seitlich eine Abdeckung in Form eines elastischen Blechstreifens angebracht. Im nicht eingesteckten Zustand ragt die Abdeckung mit dem vorderen Ende so über die Bohrung, dass die Bohrung verschlossen ist. Beim Einstecken des Steckverbinders in ein Kupplungsteil wird die Abdeckung gegen eine Federwirkung so (nach hinten bzw. quer) verschoben, dass die Bohrung in der Führungshülse freigegeben wird. Nachteilig ist bei dieser Lösung, dass die Führungshülse bei nicht eingestecktem Steckverbinder nicht gegen mechanische Einwirkungen geschützt ist. Weiterhin verhindert der seitlich angebrachte Blechstreifen, dass die Führungshülse beim Einstecken des Steckverbinders zum Zentrieren der Verbindung verwendet werden kann. Auch wird beim Betätigen der Abdeckung eine quer zur Steckrichtung orientierte Kraft auf die Führungshülse ausgeübt, die leicht zu Funktionsstörungen führen kann. Darüber hinaus ist dieser Schutzmechanismus nicht für Steckverbinder geeignet, bei denen anstelle der Führungshülse eine Ferrule aus Keramik vorgesehen ist, in welche die Faser mit dem Ende eingeklebt ist.

### DARSTELLUNG DER ERFINDUNG

Es ist daher Aufgabe der Erfindung, ein Steckverbindersystem zu schaffen, welches die Nachteile bekannter Systeme vermeidet und sich insbesondere bei einfachem und platzsparenden Aufbau des Abdeckmechanismus durch eine hohe Funktionssicherheit auszeichnet.

Die Aufgabe wird durch die Gesamtheit der Merkmale des Anspruchs 1 gelöst. Der Kern der Erfindung besteht darin, die Abdeckmittel aufzuteilen in ein erstes Abdeckelement, welches das Ende der optischen Faser in axialer Richtung schützt und quer zur Achse verschiebbar ist, und ein zweites Abdeckelement, welches das aus dem Gehäuse herausragende Ende der optischen Faser in radialer Richtung schützt und parallel zur Achse nach hinten verschiebbar ist, und welches eine erste Durchgangsöffnung für das Ende der optischen Faser aufweist, wobei die erste Durchgangsöffnung durch das erste Abdeckelement verschliessbar ist. Durch die Aufteilung ergeben sich für beide Abdeckelemente vereinfachte Bewegungsabläufe. Gleichzeitig ermöglicht die Aufteilung eine platzsparende Anordnung und eine getrennte Optimierung der Funktionen.

Besonders kompakt wird der Abdeckmechanismus, wenn gemäss einer ersten bevorzugten Ausgestaltung der Erfindung das erste Abdeckelement an dem zweiten Abdeckelement verschiebbar angeordnet ist, wenn das erste Abdecketement als Jalousie ausgebildet ist, welche in einer im zweiten Abdeckelement ausgebildeten Führungsbahn quer zur Achse verschiebbar gelagert ist, wenn die Führungsbahn ausserhalb des Bereiches der ersten Durchgangsöffnung in einem Bogen nach hinten in eine parallel zur Achse liegende Richtung umbiegt, und wenn zum Oeffnen und Schliessen der Jalousie die Jalousie mit ihrem hinteren Ende parallel zur Achse verschoben wird.

Das selbsttätige Schliessen der Jalousie wird bevorzugt dadurch bewirkt, dass die Jalousie durch ein Federelement, vorzugsweise in Form einer Druckfeder, in Schliessrichtung vorgespannt ist.

Einen besonders einfachen und wirkungsvollen Mechanismus zum Oeffnen der Jalousie erhält man, wenn gemäss einer anderen bevorzugten Ausgestaltung der Erfindung die Jalousie mit ihrem hinteren Ende an einem Gleiter befestigt ist, welcher im Gehäuse des Steckverbinders in Richtung der Achse verschiebbar gelagert ist, und wenn an der Kupplung und an dem Gleiter Eingriffsmittel vorgesehen sind, durch welche der Gleiter nach hinten verschoben wird, wenn der Steckverbinder in die Kupplung eingesteckt wird. Bevorzugt umfassen dabei die Eingriffsmittel zwei an den Innenseiten der Seitenwände der Kupplung angeordnete Betätigungsnocken sowie zwei an den Seiten des Gleiters angeordnete, hakenförmige Mitnehmer, welche mit den Betätigungsnocken in Eingriff kommen, wenn der Steckverbinder in die Kupplung eingesteckt wird.

Um ein störendes Reflektieren von Licht durch die geschlossene Jalousie zurück in die optische Faser sicher zu unterbinden, ist es von Vorteil, wenn die Führungsbahn im Bereich der ersten Durchgangsöffnung leicht schräg zur Achse verläuft.

Besonders einfach lässt sich der Abdeckmechanismus der Erfindung verwirklichen, wenn das zweite Abdeckelement als kappenförmiger Deckel ausgebildet ist, und die Führungsbahn für die Jalousie zwischen dem Deckel und einem mit einer zweiten Durchgangsöffnung versehenen, in den Deckel eingesetzten Halter gebildet wird.

Zum Oeffnen des zweiten Abdeckelements ist in der Kupplung vorzugsweise ein Anschlag vorgesehen, gegen den das zweite Abdeckelement bzw. der Deckel stösst, und durch den das zweite Abdeckelement bzw. der Deckel unter Freigabe des Endes der optischen Faser nach hinten zurückgeschoben wird, wenn der Steckverbinder in die Kupplung eingesteckt wird.

Zum Schliessen des zweiten Abdeckelements sind in der Kupplung und an dem zweiten Abdeckelement bzw. dem Deckel vorzugsweise Rastmittel angeordnet, welche das zweite Abdeckelement bzw. den Deckel mit der Kupplung verrasten, wenn der Steckverbinder vollständig in die Kupplung eingesteckt ist, und das zweite Abdeckelement bzw. den Deckel beim Herausziehen des Steckverbinders aus der Kupplung solange in der Kupplung festhalten, bis durch die relative Verschiebung zwischen dem zweiten Abdeckelement bzw. dem Deckel und dem Gehäuse des Steckverbinders das Ende der optischen Faser in radialer Richtung wieder abgedeckt ist. Bevorzugt umfassen die Rastmittel eine am zweiten Abdeckelement bzw. Deckel angebrachte Rastnase sowie eine Verschlussklappe, wobei die Verschlussklappe in der Kupplung mittels eines quer zur Achse liegenden Schwenklagers verschwenkbar angeordnet ist und die Kupplung verschliesst, wenn der Steckverbinder nicht eingesteckt ist, und wobei die Verschlussklappe durch Einstecken des Steckverbinders in die Kupplung aufgeschwenkt wird und mit ihrem freien Ende hinter der Rastnase einrastet.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: einen Längsschnitt durch einen Steckverbinder gemäss einem bevorzugten Ausführungsbeispiel der Erfindung im nicht-eingesteckten Zustand mit geschlossener Abdeckvorrichtung;

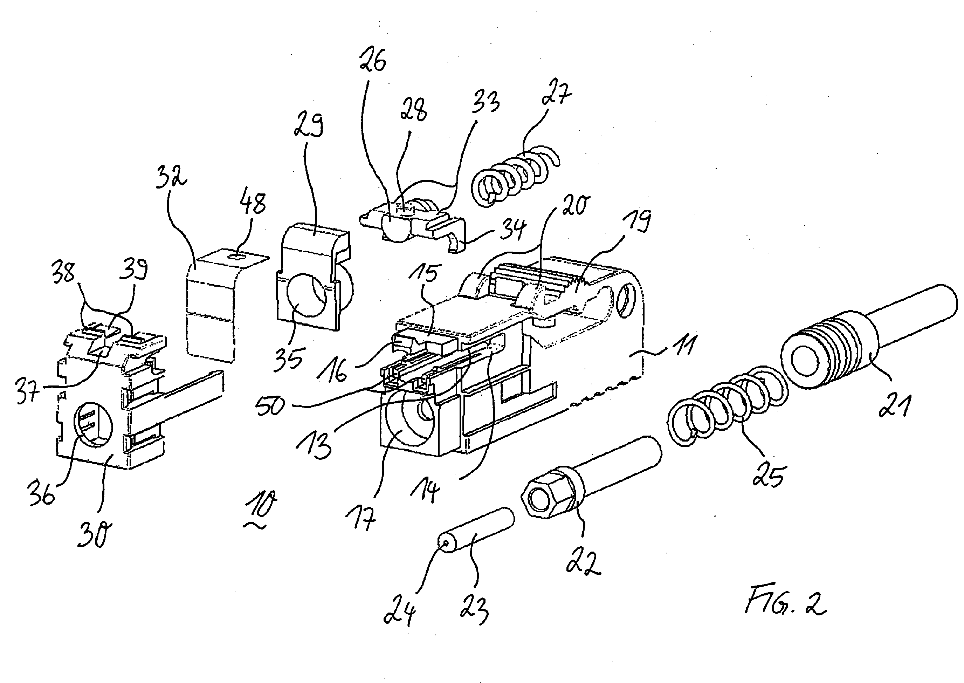

- Fig. 2: in einer Explosionsdarstellung die einzelnen Teile des Steckverbinders nach Fig. 1;
- Fig. 3: in einer zu Fig. 1 vergleichbaren Darstellung den in die Kupplung eingesteckten Steckverbinder aus Fig. 1 mit geöffneter Abdeckvorrichtung;

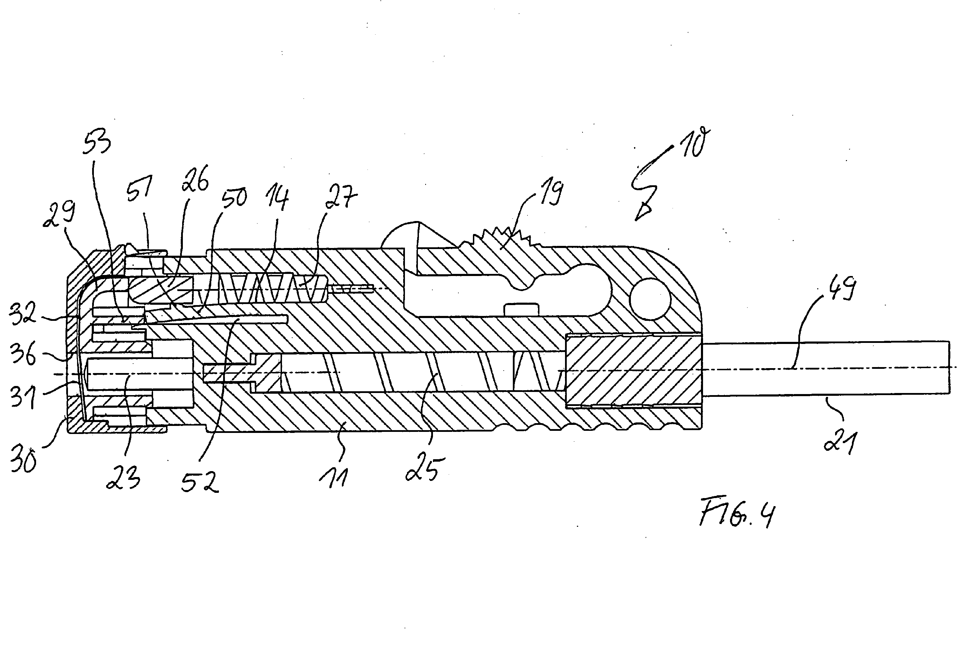

- Fig. 4 und 5: in einer anderen Schnittdarstellung die Funktion des zwischen den beiden Abdeckelementen der Abdeckvorrichtung wirkenden Verriegelungsmechanismus.

### WEGE ZUR AUSFÜHRUNG DER ERFINDUNG

In Fig. 1 ist ein Längsschnitt durch einen Steckverbinder gemäss einem bevorzugten Ausführungsbeispiel der Erfindung im nicht-eingesteckten Zustand mit geschlossener Abdeckvorrichtung wiedergegeben. Der Steckverbinder 10, dessen einzelne Teile auch in Fig. 2 mit gleichen Bezugszeichen dargestellt sind, weist ein als Spritzgussteil aus einem geeigneten Kunststoff hergestelltes längliches Gehäuse 11 auf, das sich in Richtung einer Achse 49 erstreckt. Die Achse 49 ist zugleich die optische Achse für die (in Fig. 1 nicht gezeigte) optische Faser und gibt darüber hinaus die Steckrichtung an, in welcher der Steckverbinder 10 gesteckt wird.

Koaxial zur Achse 49 verläuft durch das Gehäuse 11 eine Bohrung 12, welche das optische Kabel bzw. die optische Faser aufnimmt. Am vorderen Ende (links in Fig. 1) und am hinteren Ende (rechts in Fig. 1) des Steckverbinders 10 geht die Bohrung 12 jeweils in eine Erweiterung 17 bzw. 18 mit vergrössertem Innendurchmesser über. In die erste Erweiterung 17 ragt eine zylindrische Ferrule 23 hinein, in deren zentraler Bohrung 24 das Ende der optischen Faser so eingeklebt ist, dass die Stirnseite der Faser mit der bombierten Stirnseite der Ferrule 23 abschliesst.

Die Ferrule 23 sitzt mit dem hinteren Ende in einem Ferrulenhalter 22, der in der Bohrung 12 in Richtung der Achse 49 verschiebbar gelagert ist und gegen den Druck einer ersten Druckfeder 25 nach hinten geschoben werden kann. In die zweite Erweiterung 18 ist ein Dorn 21 eingesetzt, dessen hülsenförmiger hinterer Abschnitt zum Fixieren des optischen Kabels und zum Aufschieben einer Knickschutztülle verwendet wird (vergleichbar zu Fig. 14 der WO-A1-00/16145). Am hinteren Ende des Gehäuses 11 ist weiterhin ein sich nach vorne erstreckender, elastischer Rastarm 19 angeformt, der zur Fixierung des eingesteckten Steckverbinders 10 dient (siehe Fig. 3). Der Rastarm 19 hat an seinem vorderen freien Ende zwei Rasthaken 20, auf deren Funktion im Zusammenhang mit Fig. 3 weiter unten noch näher eingegangen wird.

Am vorderen Ende des Steckverbinders ist im Bereich der Ferrule 23 eine Schutz- und Abdeckvorrichtung angebracht, die im wesentlichen aus zwei Abdeckelementen besteht. Das eine Abdeckelement ist ein kappenförmiger Deckel 30 mit einer zentralen Durchgangsöffnung (36 in Fig. 2). Der Deckel 30 ist in Richtung der Achse 49 verschiebbar am vorderen Ende des Gehäuses 11 gelagert und wird unter Freigabe des vorderen Endes der Ferrule 23 über die Ferrule 23 nach hinten zurückgeschoben, wenn der Steckverbinder 10 in die zugehörige Kupplung (40 in Fig. 3) eingesteckt wird.

Der Deckel 30 schützt - wenn er nicht zurückgeschoben ist - die aus der Erweiterung 17 herausragende Ferrule 23 in radialer (seitlicher) Richtung. Für den Schutz der Ferrule 23 in axialer Richtung (von vom) ist als anderes Abdeckelement eine Jalousie 32 (siehe auch Fig. 2) in Form eines rechteckigen, elastisch biegbaren Blechstreifens vorgesehen, die in einer Führungsbahn 31 am Deckel 30 geführt ist. Die Führungsbahn 31 wird dadurch gebildet, dass in den Deckel 30 von hinten ein in der Form angepasster Halter 29 mit einer vergleichbaren Durchgangsöffnung (35 in Fig. 2) unter Einhaltung eines geringen Abstandes, welcher der Breite der Führungsbahn 31 entspricht, eingesetzt wird.

Die Führungsbahn 31 verläuft im Bereich der ersten Durchgangsöffnung 36 im wesentlichen senkrecht zur Achse 49. Sie weicht jedoch von der Senkrechten soweit ab, dass eine Reflexion von Licht durch die Jalousie 32 zurück in die optische Faser sicher verhindert wird. Ausserhalb des Bereiches der ersten Durchgangsöffnung 36 biegt die Führungsbahn 31 in einem Bogen nach hinten in eine parallel zur Achse 49 liegende Richtung um. Die in der Führungsbahn 31 geführte Jalousie 32 ist entsprechend gebogen. Auf diese Weise wird erreicht, dass ein Oeffnen und Schliessen der Jalousie 32 durch ein Verschieben des hinteren Endes der Jalousie 32 parallel zur Achse 49 erfolgt.

Die Jalousie 32 ist mit dem hinteren Ende an einem Gleiter 26 befestigt, der im oberen Teil des Gehäuses 11 in einer schlitzförmigen Ausnehmung 13 in Achsenrichtung verschiebbar gelagert ist und gegen den Druck einer zweiten Druckfeder 27 nach hinten zurückgeschoben werden kann. Der Gleiter 26 weist auf der Oberseite einen Haltenocken 28 auf, der durch ein entsprechendes Loch 48 in der Jalousie 32 hindurchgreift. An zwei gegenüberliegenden Seiten des Gleiters 26 sind flache Arme 33 angeformt, die durch seitliche Schlitze 14 im Gehäuse 11 nach aussen hervorstehen. An den äusseren Enden der Arme 33 sind hakenförmige Mitnehmer 34 angeformt, die beim Einstecken des Steckverbinders 10 in die Kupplung 40 mit an den Innenwänden der Kupplung 40 fest angebrachten Betätigungsnocken (43 in Fig. 3) in Eingriff kommen. Der Gleiter 26 wird so beim Einstecken relativ zum Gehäuse 11 zurückgeschoben und die mit dem Gleiter 26 zurückgezogene Jalousie 32 gibt die erste Durchgangsöffnung 36 frei. Wird der Steckverbinder 10 aus der Kupplung 40 wieder herausgezogen, schiebt die Druckfeder 27 den Gleiter 26 nach vorne zurück und die Jalousie 32 verschliesst die erste Durchgangsöffnung 36 wieder.

Die Betätigung des Deckels 30, die - wie weiter unten anhand der Figuren 4 und 5 erklärt wird - abhängig von der Betätigung der Jalousie 32 erfolgt, kann anhand der Fig. 3 erläutert werden, die einen in die Kupplung 40 vollständig eingesteckten Steckverbinder 10 zeigt. Von der Kupplung 40 ist in Fig. 3 nur derjenige (rechte) Teil dargestellt, der für den von rechts eingesteckten Steckverbinder 10 des Steckverbindersystems 47 notwendig ist. Für einen zweiten, von links eingesteckten Steckverbinder ist noch ein zweiter, spiegelbildlicher (linker) Teil vorhanden (siehe z.B. Fig. 21 der WO-A1-00/16145). Die Kupplung 40 hat in der Mitte eine zur Achse 49 koaxiale Buchsenhalterung 41, in die eine Keramikhülse zur Führung der Ferrulen der beiden Steckverbinder einsetzbar ist. Die Buchsenhalterung 41 wird von einer senkrecht in der Mitte angeordneten Wand gehalten, die für den Deckel 30 des eingesteckten Steckverbinders 10 einen Anschlag 42 bildet. Wird nun der Steckverbinder 10 in die Kupplung 40 eingesteckt, kommen zuerst die seitlichen Betätigungsnocken 43 (in Fig. 3 - obgleich nicht sichtbar - zur Verdeutlichung eingezeichnet) in Eingriff mit den Mitnehmern 34 des Gleiters 26. Der Gleiter 26 fährt in der Ausnehmung 13 zurück und zieht die Jalousie 32 über der ersten Durchgangsöffnung 36 auf. Der Deckel 30 wird in dieser Phase durch einen weiter unten beschriebenen Verriegelungsmechanismus an einer Rückzugsbewegung gehindert. Nachdem die erste Durchgangsöffnung 36 frei und die Verriegelung entgriegelt ist, stösst der Steckverbinder 10 beim weiteren Einschieben mit dem Deckel 30 am Anschlag 42 der Kupplung 40 an und der Deckel 30 wird zurückgeschoben, bis das vordere Ende der Ferrule 32 gemäss der Darstellung in Fig. 3 frei ist.

Für das Vorschieben des Deckels aus der in Fig. 3 gezeigten zurückgeschobenen Position ist ein spezieller Rastmechanismus vorgesehen, der in Fig. 3 dargestellt ist. Zu diesem Rastmechanismus gehören zwei auf der Oberseite des Deckels 30 angeordnete Rastnasen 38 sowie eine Verschlussklappe 45. Die Verschlussklappe 45 ist mittels eines quer zur Achse 49 orientierten Schwenklagers 46 im Inneren der Kupplung 40 verschwenkbar angelenkt. Beim Einstecken des Steckverbinders 10 in die Kupplung 40 wird die Verschlussklappe 45 gegen den Druck einer Feder aufgeschwenkt und rastet nach dem vollständigen Einstecken des Steckverbinders 10 mit der freien Kante auf einer Auflagefläche 39 liegend hinter den Rastnasen 38 ein (Fig. 3). Wird der Steckverbinder 10 wieder aus der Kupplung 40 herausgezogen, hält die eingerastete Verschlussklappe 45 den Deckel 30 solange fest bzw. zurück, bis er durch einen Entriegelungsnocken 16, die an einem Ansatz 15 des Gehäuses 11 angeformt ist und mit dem Gehäuse 11 zurückgleitet, über die Rastnasen 38 angehoben wird und den Deckel 30 freigibt. Damit sich der Entriegelungsnocken 16 relativ zum Deckel 30 frei bewegen kann, ist zwischen den Rastnasen 38 eine Ausnehmung 37 vorgesehen.

Zur Verriegelung des eingesteckten Steckverbinders 10 in der Kupplung 40 ist der bereits erwähnte elastische Rastarm 19 mit den an seinem freien Ende angeordneten Rasthaken 20 vorgesehen. Beim Einstecken des Steckverbinders rastet der Rastarm 19 mit den Rasthaken 20 hinter zwei an der Innenkante der Kupplung 40 angeformten Rastnasen 44 ein. Zum Entriegeln muss der Rastarm 19 dann her untergedrückt werden, bis die Rasthaken 20 von den Rastnasen 44 freikommen.

Die bereits erwähnte Verriegelung des Deckels 30 durch den Gleiter 26 kann am besten an einer anderen Schnittdarstellung erläutert werden, wie sie in den Figuren 4 und 5 für den verriegelten bzw. entriegelten Zustand dargestellt ist. Wesentliche Elemente des Verriegelungsmechanismus sind zwei am Gehäuse 11 angeformte, sich parallel in axialer Richtung erstreckende, federnd nach unten auslenkbare Verriegelungshebel 50 (Fig. 2, 4 und 5), die an den unteren Innenkanten der Schlitze 14 angeordnet sind und auf der Oberseite jeweils einen Nocken 51 tragen. Unterhalb der Verriegelungshebel 50 ist jeweils ein schlitzförmiger Zwischenraum 52 frei gelassen, welcher beim Zurückschieben des Deckels 30 am Halter 29 angeformte und zum Zwischenraum 52 passend ausgebildete Zungen 53 aufnehmen kann.

Im ausgesteckten Zustand des Steckverbinders 10, wie er in Fig. 4 dargestellt ist, befindet sich der Gleiter 26 mit seinen Armen 33 direkt oberhalb der Nocken 51 der Verriegelungshebel 50. Die Verriegelungshebel 50 werden dadurch nach unten federnd ausgelenkt und versperren den Zungen 53 des Halters 29 den Eintritt in die darunterliegenden Zwischenräume 52. Der Halter 29 und damit auch der Deckel 30 werden dadurch in dieser Phase an einem Zurückweichen wirksam gehindert.

Wird der Gleiter 26 mit der Jalousie 32 beim Einstecken des Steckverbinders 10 auf die weiter oben beschriebene Art soweit zurückgeschoben, dass die Durchgangsöffnung 36 für die Ferrule 23 freigegeben wird, werden die Nocken 51 freigegeben und die Verriegelungshebel 50 können in ihre achsenparallele Ruheposition zurückschwenken. Die darunterliegenden Zwischenräume 52 werden dann freigegeben, so dass der Halter 29 mit seinen Zungen 53 in die Zwischenräume 52 einfahren und sich der Deckel 30 entsprechend zurückbewegen und die Ferrule 23 freigeben kann (Fig. 5).

### BEZUGSZEICHENLISTE

- 10: Steckverbinder
- 11: Gehäuse
- 12: Bohrung
- 13: Ausnehmung (schlitzförmig)
- 14: Schlitz
- 15: Ansatz
- 16: Entriegelungsnocken
- 17,18: Erweiterung
- 19: Rastarm
- 20: Rasthaken
- 21: Dom
- 22: Ferrulenhalter
- 23: Ferrule
- 24: Bohrung
- 25,27: Druckfeder
- 26: Gleiter
- 28: Haltenocken
- 29: Halter
- 30: Deckel
- 31: Führungsbahn
- 32: Jalousie
- 33: Arm
- 34: Mitnehmer (hakenförmig)
- 35,36: Durchgangsöffnung
- 37: Ausnehmung
- 38,44: Rastnase
- 39: Auflagefläche
- 40: Kupplung
- 41: Buchsenhalterung
- 42: Anschlag
- 43: Betätigungsnocken
- 45: Verschlussklappe
- 46: Schwenklager
- 47: Steckverbindersystem
- 48: Loch
- 49: Achse
- 50: Verriegelungshebel
- 51: Nocken
- 52: Zwischenraum (schlitzförmig)
- 53: Zunge (starr)

## Patentansprüche

1. Faseroptisches Steckverbindersystem (47), umfassend einen faseroptischen Steckverbinder (10) sowie eine Kupplung (40), in welche der Steckverbinder (10) zum Herstellen einer optischen Verbindung einsteckbar ist, wobei der Steckverbinder (10) ein sich längs einer Achse (49) erstreckendes Gehäuse (11) aufweist, in welchem in Richtung der Achse (49) liegend eine optische Faser angeordnet ist und mit einem Ende aus der Stirnseite des Gehäuses (11) herausragt, und wobei Mittel (30, 32) zum Abdecken des Endes der optischen Faser vorgesehen sind, die beim nicht eingesteckten Steckverbinder (10) das Ende der optischen Faser gegen Einwirkungen von aussen schützen und beim Einstecken des Steckverbinders (10) in die Kupplung (40) das aus dem Gehäuse (11) herausragende Ende der optischen Faser freigeben, **dadurch gekennzeichnet, dass** die Abdeckmittel (30, 32) ein erstes Abdeckelement (32) umfassen, welches das Ende der optischen Faser in axialer Richtung schützt und quer zur Achse (49) verschiebbar ist, und dass die Abdeckmittel (30, 32) ein zweites Abdeckelement (30) umfassen, welches das aus dem Gehäuse (11) herausragende Ende der optischen Faser in radialer Richtung schützt und parallel zur Achse (49) nach hinten verschiebbar ist, und welches eine erste Durchgangsöffnung (36) für das Ende der optischen Faser aufweist, wobei die erste Durchgangsöffnung (36) durch das erste Abdeckelement (32) verschliessbar ist.

2. Steckverbindersystem nach Anspruch 1, **dadurch gekennzeichnet, dass** das erste Abdeckelement (32) an dem zweiten Abdeckelement (30) verschiebbar angeordnet ist.

3. Steckverbindersystem nach Anspruch 2, **dadurch gekennzeichnet, dass** das erste Abdeckelement als Jalousie (32) ausgebildet ist, welche in einer im zweiten Abdeckelement (30) ausgebildeten Führungsbahn (31) quer zur Achse (49) verschiebbar gelagert ist.

4. Steckverbindersystem nach Anspruch 3, **dadurch gekennzeichnet, dass** die Führungsbahn (31) ausserhalb des Bereiches der ersten Durchgangsöffnung (36) in einem Bogen nach hinten in eine parallel zur Achse (49) liegende Richtung umbiegt, und dass zum Oeffnen und Schliessen der Jalousie (32) die Jalousie (32) mit ihrem hinteren Ende parallel zur Achse (49) verschoben wird.

5. Steckverbindersystem nach Anspruch 4, **dadurch gekennzeichnet, dass** die Jalousie (32) durch ein Federelement, vorzugsweise in Form einer Druckfeder (27), in Schliessrichtung vorgespannt ist.

6. Steckverbindersystem nach einem der Ansprüche 4 und 5, **dadurch gekennzeichnet, dass** die Jalousie (32) mit ihrem hinteren Ende an einem Gleiter (26) befestigt ist, welcher im Gehäuse (11) des Steckverbinders (10) in Richtung der Achse (49) verschiebbar gelagert ist, und dass an der Kupplung (40) und an dem Gleiter (26) Eingriffsmittel (34, 43) vorgesehen sind, durch welche der Gleiter (26) nach hinten verschoben wird, wenn der Steckverbinder (10) in die Kupplung (40) eingesteckt wird.

7. Steckverbindersystem nach Anspruch 6, **dadurch gekennzeichnet, dass** die Eingriffsmittel zwei an den Innenseiten der Seitenwände der Kupplung (40) angeordnete Betätigungsnocken (43) sowie zwei an den Seiten des Gleiters (26) angeordnete, hakenförmige Mitnehmer (34) umfassen, welche mit den Betätigungsnocken (43) in Eingriff kommen, wenn der Steckverbinder (10) in die Kupplung (40) eingesteckt wird.

8. Steckverbindersystem nach einem der Ansprüche 3 bis 7, **dadurch gekennzeichnet, dass** die Führungsbahn (31) im Bereich der ersten Durchgangsöffnung (36) derart schräg zur Achse (49) verläuft, dass eine Reflexion von Licht durch die Jalousie (32) zurück in die optische Faser sicher verhindert wird.

9. Steckverbindersystem nach einem der Ansprüche 3 bis 8, **dadurch gekennzeichnet, dass** das zweite Abdeckelement als kappenförmiger Deckel (30) ausgebildet ist, und dass die Führungsbahn (31) für die Jalousie (32) zwischen dem Deckel (30) und einem mit einer zweiten Durchgangsöffnung (35) versehenen, in den Deckel (30) eingesetzten Halter (29) gebildet wird.

10. Steckverbindersystem nach einem der Ansprüche 1 bis 9, **dadurch gekennzeichnet, dass** in der Kupplung (40) ein Anschlag (42) vorgesehen ist, gegen den das zweite Abdeckelement bzw. der Deckel (30) stösst, und durch den das zweite Abdeckelement bzw. der Deckel (30) unter Freigabe des Endes der optischen Faser nach hinten zurückgeschoben wird, wenn der Steckverbinder (10) in die Kupplung (40) eingesteckt wird.

11. Steckverbindersystem nach Anspruch 10, **dadurch gekennzeichnet, dass** ein Verriegelungsmechanismus (50, 51, 52, 53) vorgesehen ist, welcher ein Verschieben des zweiten Abdeckelementes (30) erst zulässt, wenn das erste Abdeckelement (32) das Ende der optischen Faser freigegeben hat.

12. Steckverbindersystem nach einem der Ansprüche 10 und 11, **dadurch gekennzeichnet, dass** in der Kupplung (40) und an dem zweiten Abdeckelement bzw. dem Deckel (30) Rastmittel (38, 45, 46) angeordnet sind, welche das zweite Abdeckelement bzw. den Deckel (30) mit der Kupplung (40) verrasten, wenn der Steckverbinder (10) vollständig in die Kupplung (40) eingesteckt ist, und das zweite Abdeckelement bzw. den Deckel (30) beim Herausziehen des Steckverbinders (10) aus der Kupplung (40) solange in der Kupplung (40) festhalten, bis durch die relative Verschiebung zwischen dem zweiten Abdeckelement bzw. dem Deckel (30) und dem Gehäuse (11) des Steckverbinders das Ende der optischen Faser in radialer Richtung wieder abgedeckt ist.

13. Steckverbindersystem nach Anspruch 12, **dadurch gekennzeichnet, dass** die Rastmittel eine am zweiten Abdeckelement bzw. Deckel (30) angebrachte Rastnase (38) sowie eine Verschlussklappe (45) umfassen, wobei die Verschlussklappe (45) in der Kupplung (40) mittels eines quer-zur Achse-(49) liegenden Schwenklagers (46) verschwenkbar angeordnet ist und die Kupplung (40) verschliesst, wenn der Steckverbinder (10) nicht eingesteckt ist, und wobei die Verschlussklappe (45) durch Einstecken des Steckverbinders (10) in die Kupplung (40) aufgeschwenkt wird und mit ihrem freien Ende hinter der Rastnase (38) einrastet.

## Claims

1. A fiber-optical connector system (47), comprising a fiber-optical connector (10) and a coupling (40), into which the connector (10) can be inserted to establish an optical connection, the connector (10) having a housing (11) which extends along an axis (49) and in which an optical fiber is arranged such that it lies in the direction of the axis (49) and projects with one end from the end face of the housing (11), and means (30, 32) being provided for covering the end of the optical fiber, which means protect the end of the optical fiber against external effects when the connector (10) is not inserted and release the end of the optical fiber projecting from the housing (11) when the connector (10) is inserted into the coupling (10), **characterized in that** the covering means (30, 32) comprise a first covering element (32), which protects the end of the optical fiber in the axial direction and can be displaced transversely to the axis (49), and **in that** the coupling means (30, 32) comprise a second covering element (30), which protects the end of the optical fiber projecting from the housing (11) in the radial direction and can be displaced rearward parallel to the axis (49), and which has a first passage (36) for the end of the optical fiber, the first passage (36) being able to be closed by the first covering element (32).

2. The connector system as claimed in claim 1, **characterized in that** the first covering element (32) is arranged displaceably on the second covering element (30).

3. The connector system as claimed in claim 2, **characterized in that** the first covering element is formed as a shutter (32), which is mounted displaceably transversely to the axis (49) in a guideway (31) formed in the second covering element (30) .

4. The connector system as claimed in claim 3, **characterized in that**, outside the region of the first passage (36), the guideway (31) bends around in an arc rearward in a direction lying parallel to the axis (49), and **in that**, for opening and closing the shutter (32), the shutter (32) is displaced with its rear end parallel to the axis (49).

5. The connector system as claimed in claim 4, **characterized in that** the shutter (32) is biased in the closed direction by a spring element, preferably in the form of a compression spring (27) .

6. The connector system as claimed in either of claims 4 and 5, **characterized in that** the shutter (32) is fastened by its rear end to a slide (26), which is mounted displaceably in the direction of the axis (49) in the housing (11) of the connector (10), and **in that** engaging means (34, 43) by which the slide (26) is displaced rearward when the connector (10) is inserted into the coupling (40) are provided on the coupling (40) and on the slide (26).

7. The connector system as claimed in claim 6, **characterized in that** the engaging means comprise two actuating cams (43) arranged on the inner sides of the side walls of the coupling (40) and also two hook-shaped drivers (34), which are arranged on the sides of the slide (26) and come into engagement with the actuating cams (43) when the connector (10) is inserted into the coupling (40).

8. The connector system as claimed in one of claims 3 to 7, **characterized in that**, in the region of the first passage (36), the guideway (31) runs at such an angle to the axis (49) that a reflection of light through the shutter (32) back into the optical fiber is reliably prevented.

9. The connector system as claimed in one of claims 3 to 8, **characterized in that** the second covering element is formed as a flap-shaped cover (30), and **in that** the guideway (31) for the shutter (32) is formed between the cover (30) and a holder (29) which is provided with a second passage (35) and is fitted into the cover (30).

10. The connector system as claimed in one of claims 1 to 9, **characterized in that** in the coupling (40) there is a stop (42) against which the second covering element or the cover (30) butts, and by which the second covering element or the cover (30) is pushed back rearward, thereby releasing the end of the optical fiber, when the connector (10) is inserted into the coupling (40).

11. The connector system as claimed in claim 10, **characterized in that** a locking mechanism (50, 51, 52, 53) which only allows displacement of the second covering element (30) when the first covering element (32) has released the end of the optical fiber is provided.

12. The connector system as claimed in either of claims 10 and 11, **characterized in that** in the coupling (40) and on the second covering element or the cover (30) there are latching means (38, 45, 46) which latch the second covering element or the cover (30) to the coupling (40) when the connector (10) is completely inserted into the coupling (40), and securely hold the second covering element or the cover (30) in the coupling (40) when the connector (10) is pulled out of the coupling (40), until the relative displacement between the second covering element or the cover (30) and the housing (11) of the connector causes the end of the optical fiber to be covered again in the radial direction.

13. The connector system as claimed in claim 12, **characterized in that** the latching means comprise a detent (38) provided on the second covering element or cover (30) and also a closure flap (45), the closure flap (45) being pivotably arranged in the coupling (40) by means of a pivot bearing (46) lying transversely to the axis (49) and closing the coupling (40) when the connector (10) is not inserted, and the closure flap (45) being pivoted up and latching with its free end behind the detent (38) by insertion of the connector (10) into the coupling (40).

## Revendications

1. Système (47) de connecteur enfichable pour fibre optique, qui comprend un connecteur enfichable (10) pour fibre optique ainsi qu'un accouplement (40) dans lequel le connecteur enfichable (10) peut être enfiché pour établir une liaison optique, dans lequel le connecteur enfichable (10) présente un boîtier (11) qui s'étend le long d'un axe (49) et dans lequel une fibre optique est disposée dans la direction de l'axe (49) et déborde par une extrémité hors du côté frontal du boîtier (11), des moyens (30, 32) de recouvrement de l'extrémité de la fibre optique étant prévus et protégeant l'extrémité de la fibre optique contre les effets de l'extérieur lorsque le connecteur enfichable (10) n'est pas enfiché et libère l'extrémité de la fibre optique qui sort du boîtier (11) lorsque le connecteur enfichable (10) est enfiché dans l'accouplement (40), **caractérisé en ce que** les moyens de recouvrement (30, 32) comprennent un premier élément de recouvrement (32) qui protège l'extrémité de la fibre optique dans la direction axiale et qui peut coulisser transversalement par rapport à l'axe (49) et **en ce que** les moyens de recouvrement (30, 32) comprennent un deuxième élément de recouvrement (30) qui protège dans la direction radiale l'extrémité de la fibre optique qui sort du boîtier (11) et peut être glissé vers l'arrière parallèlement à l'axe (49) et qui présente une première ouverture de passage (36) pour l'extrémité de la fibre optique, la première ouverture de passage (36) pouvant être fermée par le premier élément de recouvrement (32).

2. Système de connecteur enfichable selon la revendication 1, **caractérisé en ce que** le premier élément de recouvrement (32) est disposé de façon à pouvoir coulisser sur le deuxième élément de recouvrement (30).

3. Système de connecteur enfichable selon la revendication 2, **caractérisé en ce que** le premier élément de recouvrement est configuré comme volet (32) monté à coulissement transversalement par rapport à l'axe (49) dans une piste de guidage (31) ménagée dans le deuxième élément de recouvrement (30).

4. Système de connecteur enfichable selon la revendication 3, **caractérisé en ce qu'**à l'extérieur de la zone de la première ouverture de passage (36), la piste de guidage (31) est cintrée en arc orienté vers l'intérieur dans une direction parallèle à l'axe (49) et **en ce que** pour ouvrir et fermer le volet (32), l'extrémité arrière du volet (32) est déplacée parallèlement à l'axe (49).

5. Système de connecteur enfichable selon la revendication 4, **caractérisé en ce que** le volet est précontraint dans la direction de fermeture par un élément élastique qui présente de préférence la forme d'un ressort de compression (27).

6. Système de connecteur enfichable selon l'une des revendications 4 et 5, **caractérisé en ce que** l'extrémité arrière du volet (32) est fixée sur un coulisseau (26) qui est monté à coulissement dans la direction de l'axe (49) dans le boîtier (11) du connecteur enfichable (10) et **en ce que** des moyens d'engagement (34, 43) par lesquels le coulisseau (26) est déplacé vers l'arrière lorsque le connecteur enfichable (10) est enfiché dans l'accouplement (40) sont prévus sur l'accouplement (40) et sur le coulisseau (26).

7. Système de connecteur enfichable selon la revendication 6, **caractérisé en ce que** les moyens d'engagement comprennent deux bosses d'actionnement (43) disposées sur le côté intérieur des parois latérales de l'accouplement (40) ainsi que deux entraîneurs (34) en forme de crochets disposés sur les côtés du coulisseau (26) et qui s'engagent sur les bosses d'actionnement (43) lorsque le connecteur enfichable (10) est enfiché dans l'accouplement (40).

8. Système de connecteur enfichable selon l'une des revendications 3 à 7, **caractérisé en ce que** dans la zone de la première ouverture de passage (36), la piste de guidage (31) s'étend obliquement par rapport à l'axe (49) de manière à empêcher de manière sûre que la lumière réfléchie par le volet (32) retourne dans la fibre optique.

9. Système de connecteur enfichable selon l'une des revendications 3 à 8, **caractérisé en ce que** le deuxième élément de recouvrement est configuré comme couvercle (30) en forme de capuchon et **en ce que** la piste de guidage (31) du volet (32) est formée entre le couvercle (30) et un support (29) doté d'une deuxième ouverture de passage (35) et inséré dans le couvercle (30).

10. Système de connecteur enfichable selon l'une des revendications 1 à 9, **caractérisé en ce que** dans l'accouplement (40) est prévue une butée (42) contre laquelle le deuxième élément de recouvrement ou le couvercle (30) vient buter et par laquelle le deuxième élément de recouvrement ou le couvercle (30) sont reculés vers l'arrière en libérant l'extrémité de la fibre optique lorsque le connecteur enfichable (10) est enfiché dans l'accouplement (40).

11. Système de connecteur enfichable selon la revendication 10, **caractérisé en ce qu'**il présente un mécanisme de verrouillage (50, 51, 52, 53) qui permet au deuxième élément de recouvrement (30) de coulisser uniquement après que le premier élément de recouvrement (32) a libéré l'extrémité de la fibre optique.

12. Système de connecteur enfichable selon l'une des revendications 10 et 11, **caractérisé en ce que** sur l'accouplement (40) et sur le deuxième élément de recouvrement ou le couvercle (30) sont prévus des moyens d'encliquetage (38, 45, 46) qui engagent élastiquement le deuxième élément de recouvrement ou le couvercle (30) sur l'accouplement (40) lorsque le connecteur enfichable (10) a été enfiché complètement dans l'accouplement (40) et qui, lorsque le connecteur enfichable (10) est extrait de l'accouplement (40), maintiennent le deuxième élément de recouvrement ou le couvercle (30) dans l'accouplement (40) jusqu'à ce que le déplacement relatif entre le deuxième élément de recouvrement ou le couvercle (30) et le boîtier (11) du connecteur enfichable ait redécouvert l'extrémité de la fibre optique dans la direction radiale.

13. Système de connecteur enfichable selon la revendication 12, **caractérisé en ce que** les moyens d'encliquetage comprennent un bec d'encliquetage (38) ménagé sur le deuxième élément de recouvrement ou le couvercle (30) ainsi qu'un clapet de fermeture (45), le clapet de fermeture (45) étant disposé de manière à pouvoir pivoter dans l'accouplement (40) au moyen d'un palier de pivotement (46) situé transversalement par rapport à l'axe (49) et ferme l'accouplement (40) lorsque le connecteur enfichable (10) n'est pas enfiché et dans lequel le clapet de fermeture (45) est pivoté dans l'accouplement (40) lorsque le connecteur enfichable (10) est enfiché et s'engage élastiquement par son extrémité libre derrière le bec d'encliquetage (38) .
